(19) Europäisches Patentamt
European Patent Office
Office européen des brevets

(11) **EP 4 697 436 A1**

(12) **EUROPEAN PATENT APPLICATION**
published in accordance with Art. 153(4) EPC

(43) Date of publication:
**18.02.2026 Bulletin 2026/08**

(21) Application number: 24788638.5

(22) Date of filing: 03.04.2024

(51) International Patent Classification (IPC):
*H01M 10/0587* (2010.01)     *H01M 4/13* (2010.01)
*H01M 10/04* (2006.01)

(52) Cooperative Patent Classification (CPC):
Y02E 60/10; Y02P 70/50

(86) International application number:
**PCT/JP2024/013739**

(87) International publication number:
**WO 2024/214611 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2023 JP 2023063605**

(71) Applicant: PANASONIC INTELLECTUAL
PROPERTY
MANAGEMENT CO., LTD.
Kadoma-shi, Osaka 571-0057 (JP)

(72) Inventors:
• KATO Keiko
Kadoma-shi, Osaka 571-0057 (JP)
• FURUSAWA Daisuke
Kadoma-shi, Osaka 571-0057 (JP)
• ISHIBASHI Tatsuya
Kadoma-shi, Osaka 571-0057 (JP)

(74) Representative: Novagraaf International SA
Chemin de l'Echo 3
1213 Onex, Geneva (CH)

(54) **SECONDARY BATTERY**

(57)     The present invention provides a secondary battery with which electrode plate deformation caused by charging and discharging can be suppressed. This secondary battery has an electrode body in which a positive electrode (11) and a negative electrode (12) that has a negative electrode mixture layer (50) disposed on a negative electrode core body (48) are wound with a separator interposed therebetween. The secondary battery is characterized in that the negative electrode (12) has, at a winding start-side end, an outer peripheral-side non-facing section (44) and an inner peripheral-side non-facing section (46) that do not face the positive electrode (11), with the separator interposed therebetween, and at least one of the surface on the outer peripheral-side non-facing section (44) and the surface on the inner peripheral-side non-facing section (46) has a low-friction region in which the coefficient of static friction with the facing separator is 0.4 or less.

## Figure 3

EP 4 697 436 A1

**Description**

TECHNICAL FIELD

The present disclosure relates to a secondary battery.

BACKGROUND

Secondary batteries such as a lithium-ion secondary battery have been used as power supplies for a wide range of devices including electric vehicles, and a further increase in capacity has been required. In a secondary battery including a wound-type electrode assembly wound with a positive electrode, a negative electrode, and a separator interposed therebetween, when the electrode assembly expands due to charging and discharging, stress is locally applied in the electrode assembly, so that electrode plate deformation may occur in which at least one of the positive electrode and the negative electrode may be deformed. In particular, since local stress is likely to be applied at a center portion (winding core portion) of the electrode assembly, electrode plate deformation is likely to occur at a winding start side end of the electrode.

For example, Patent Literature 1 discloses a non-aqueous electrolyte secondary battery including a wound-type electrode assembly in which a positive electrode and a negative electrode where a negative electrode active material layer is formed on a surface of a belt-shaped negative electrode current collector are spirally wound with a separator interposed therebetween, wherein the negative electrode includes a negative electrode lead joined to a winding start side end of the negative electrode current collector, the negative electrode is wound in a state of not facing the positive electrode with the separator interposed therebetween greater than or equal to 1 turn from an inner end in a winding direction, and the non-aqueous electrolyte secondary battery includes an insulating tape attached to the negative electrode current collector so as to straddle the surface of the negative electrode lead in the winding direction. According to Patent Literature 1, an insulating tape is attached to the negative electrode current collector so as to straddle the surface of the negative electrode lead, whereby electrode plate deformation during charging and discharging can be suppressed.

CITATION LIST

PATENT LITERATURE

Patent Literature 1: WO 2018/180748 A

SUMMARY

However, in the conventional technique, electrode plate deformation may occur depending on charging and discharging conditions, and there is room for improvement. The electrode plate deformation may lead to, for example, self-discharge due to an internal short circuit of the battery, and thus it is important to suppress the electrode plate deformation.

Therefore, an object of the present disclosure is to provide a secondary battery capable of suppressing electrode plate deformation during charging and discharging.

The present disclosure relates to a secondary battery having an electrode assembly in which a positive electrode and a negative electrode where a negative electrode mixture layer is disposed on a negative electrode core are wound with a separator interposed therebetween, wherein the negative electrode has, at a winding start side end, a non-facing portion that does not face the positive electrode with the separator interposed therebetween, and a surface on the non-facing portion has a low friction region where a friction coefficient with the facing separator is less than or equal to 0.4.

According to the present disclosure, it is possible to provide a secondary battery capable of suppressing electrode plate deformation during charging and discharging.

BRIEF DESCRIPTION OF DRAWINGS

FIG. 1 is a schematic cross-sectional view of a secondary battery according to an example of an embodiment.
FIG. 2 is a view schematically illustrating a portion on an inner end side in a winding direction of an electrode assembly in the A-A cross section of FIG. 1.
FIG. 3 is a schematic cross-sectional view illustrating a state of winding start end sides of a negative electrode and a positive electrode before winding.
FIG. 4 is a schematic cross-sectional view illustrating an example of a configuration of an insulating tape.
FIG. 5 is a schematic cross-sectional view illustrating a state of winding start end sides of a negative electrode and a positive electrode before winding in Example 1.

FIG. 6 is a schematic cross-sectional view illustrating a state of winding start end sides of a negative electrode and a positive electrode before winding in Comparative Example 1.

FIG. 7 is a schematic view of an apparatus for measuring a static friction coefficient.

DESCRIPTION OF EMBODIMENTS

Hereinafter, an example of an embodiment of a secondary battery according to the present disclosure will be described in detail.

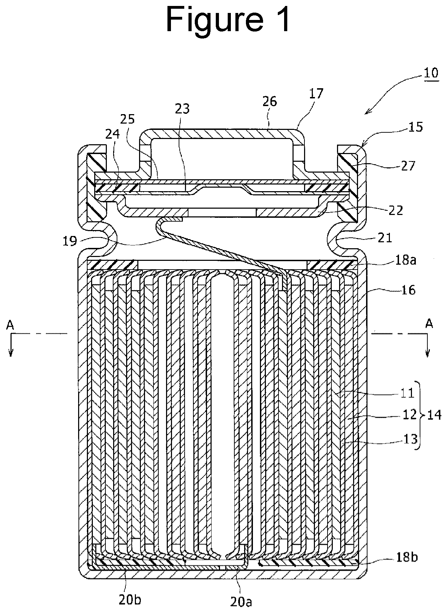

FIG. 1 is a schematic cross-sectional view of a secondary battery according to the example of the embodiment. A secondary battery 10 illustrated in FIG. 1 includes a wound-type electrode assembly 14 formed by winding a positive electrode 11 and a negative electrode 12 with a separator 13 interposed therebetween, a non-aqueous electrolyte, insulating plates 18a and 18b disposed on and under the electrode assembly 14, respectively, and a battery case 15 as an exterior body. The battery case 15 includes a case body 16 that houses the electrode assembly 14, the non-aqueous electrolyte, and the like, and a sealing assembly 17 that closes an opening of the case body 16. The battery case 15 is not limited to a cylindrical or rectangular metal case, and may be, for example, a resin case (a so-called laminate-type case) formed by laminating a resin sheet.

The non-aqueous electrolyte is, for example, an electrolyte having lithium ion conductivity, and may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product in which at least a part of hydrogen in these solvents is substituted with a halogen atom such as fluorine (for example, fluoroethylene carbonate or the like). As the electrolyte salt, for example, a lithium salt such as $LiPF_6$ is used.

As the solid electrolyte, for example, a solid or gel polymer electrolyte, an inorganic solid electrolyte, or the like can be used. As the inorganic solid electrolyte, a material known for all-solid-state lithium ion secondary batteries and the like (for example, an oxide-based solid electrolyte, a sulfide-based solid electrolyte, a halogen-based solid electrolyte, or the like) can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. The non-aqueous electrolyte is an example, and may be an aqueous electrolyte as long as it is applicable.

The case body 16 is, for example, a bottomed cylindrical metal container. A gasket 27 is provided between the case body 16 and the sealing assembly 17 to ensure airtightness within the battery. The case body 16 has a projecting portion 21 in which, for example, a part of a side surface portion of the case body 16 projects inward to support the sealing assembly 17. The projecting portion 21 is preferably formed in an annular shape in the circumferential direction of the case body 16, and supports the sealing assembly 17 on an upper surface of the projecting portion.

The sealing assembly 17 has a structure in which a filter 22, a lower vent member 23, an insulator 24, an upper vent member 25, and a cap 26 are stacked in this order from the electrode assembly 14 side. Each member constituting the sealing assembly 17 has, for example, a disk shape or a ring shape, and the members excluding the insulator 24 are electrically connected to each other. The lower vent member 23 and the upper vent member 25 are connected to each other at their central portions, and the insulator 24 is interposed between peripheral edges of the lower vent member 23 and the upper vent member 25. When the internal pressure of the secondary battery 10 increases due to heat generated by an internal short circuit or the like, for example, the lower vent member 23 deforms so as to push the upper vent member 25 up toward the cap 26 side and breaks, so that a current path between the lower vent member 23 and the upper vent member 25 is cut off. When the internal pressure further increases, the upper vent member 25 breaks, and gas is discharged from an opening of the cap 26.

In the secondary battery 10 illustrated in FIG. 1, a positive electrode lead 19 attached to the positive electrode 11 extends to the sealing assembly 17 side through a through hole of the insulating plate 18a, and is connected to a lower surface of the filter 22 which is a bottom plate of the sealing assembly 17 by welding or the like. As a result, the cap 26, which is a top plate of the sealing assembly 17 electrically connected to the filter 22, serves as a positive electrode terminal. In the secondary battery 10 shown in FIG. 1, a negative electrode lead 20a connected to a winding start side end of the negative electrode 12 and a negative electrode lead 20b connected to a winding end side end of the negative electrode 12 extend to a bottom side of the case body 16 through an insulating plate 18b, and are connected to an inner surface of the bottom of the case body 16 by welding or the like. Accordingly, the case body 16 serves as a negative electrode terminal.

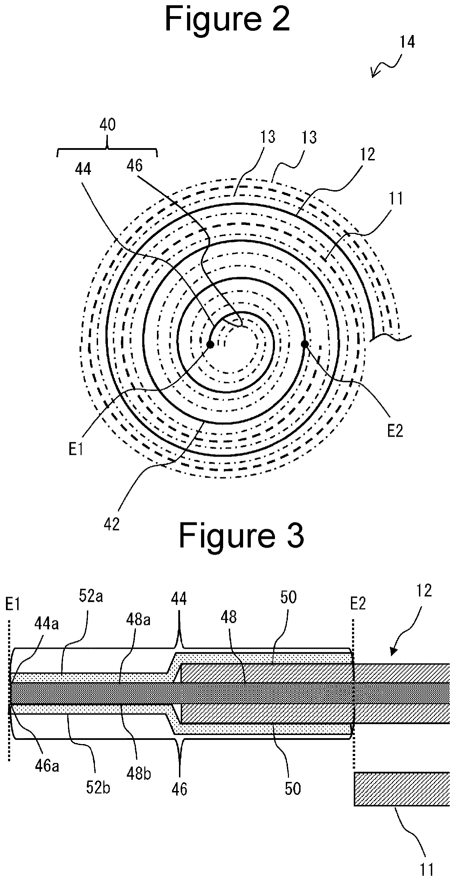

FIG. 2 is a schematic view illustrating an inner end side in a winding direction of an electrode assembly in the A-A cross section of FIG. 1. In FIG. 2, in order to make an arrangement relationship easy to understand, the negative electrode 12 is indicated by a solid line, the positive electrode 11 is indicated by a broken line, and the separator 13 is indicated by a one-dot chain line. Further, in FIG. 2, a gap between the positive electrode 11, the negative electrode 12, and the separator 13 is exaggerated. The electrode assembly 14 is formed by winding the positive electrode 11 and the negative electrode 12 with the separator 13 interposed therebetween. The electrode assembly 14 is produced, for example, by stacking the belt-shaped positive electrode 11, the belt-shaped negative electrode 12, and the pair of belt-shaped separators 13 in an order of one separator 13, the positive electrode 11, the other separator 13, and the negative electrode 12, and then spirally winding this laminate. In the electrode assembly 14, a longitudinal direction of each electrode is a winding direction, and a width direction of each electrode is a winding axis direction.

As shown in FIG. 2, the negative electrode 12 has, on the winding start end side, a non-facing portion 40 formed by an outer peripheral side non-facing portion 44 and an inner peripheral side non-facing portion 46 that do not face the positive electrode 11 with the separator 13 interposed therebetween. The negative electrode 12 has an insulating member described later. Although the insulating member is not illustrated in FIG. 2, the insulating member is disposed on the non-facing portion 40. Further, the negative electrode 12 has a facing portion 42 that faces the positive electrode 11 with the separator 13 interposed therebetween. The facing portion 42 is wound following the non-facing portion 40.

The non-facing portion 40 includes the outer peripheral side non-facing portion 44 and the inner peripheral side non-facing portion 46. The outer peripheral side non-facing portion 44 is a non-facing portion located on an outer side in a radial direction of the wound negative electrode 12, and the inner peripheral side non-facing portion 46 is a non-facing portion located on an inner side in the radial direction of the wound negative electrode 12. The non-facing portion 40 (the outer peripheral side non-facing portion 44 and the inner peripheral side non-facing portion 46) illustrated in FIG. 2 is wound 1.5 turns from the winding start end (a point E1 in FIG. 2) of the negative electrode 12. That is, the non-facing portion 40 (the outer peripheral side non-facing portion 44 and the inner peripheral side non-facing portion 46) extends from the point E1 illustrated in FIG. 2 to a point E2 along the winding direction. The number of winding turns of the non-facing portion 40 (the outer peripheral side non-facing portion 44 and the inner peripheral side non-facing portion 46) is not particularly limited, but is preferably greater than or equal to 1.5 turns, and more preferably greater than or equal to 1.5 turns and less than or equal to 3 turns.

In the present embodiment, the surface on the non-facing portion has a low friction region having a static friction coefficient with the facing separator 13 of less than or equal to 0.4. Since the surface on the non-facing portion 40 has the low friction region, for example, even when local stress is applied to the center portion of the electrode assembly by charging and discharging, the negative electrode 12 on the winding start end side slides and the stress applied to the electrode is alleviated, so that electrode plate deformation during charging and discharging is suppressed. The static friction coefficient in the low friction region is preferably less than or equal to 0.3, for example, from the viewpoint of suppressing electrode plate deformation during charging and discharging. The lower limit of the static friction coefficient is preferably greater than or equal to 0.05 from the viewpoint of manufacturing. Here, the surface on the non-facing portion 40 in the present disclosure may be the surface of the non-facing portion 40 itself or the surface of a member (for example, an insulating member described later) disposed on the non-facing portion. The entire surface on the non-facing portion may be configured to have the low friction region, or a part of the surface on the non-facing portion may be configured to have the low friction region. As shown in FIG. 2, the non-facing portion 40 has the outer peripheral side non-facing portion 44 and the inner peripheral side non-facing portion 46, but the non-facing portion has only to have the low friction region at at least one of the surface on the outer peripheral side non-facing portion 44 and the surface on the inner peripheral side non-facing portion 46. A method of measuring the static friction coefficient will be described in the Examples.

As a means for forming the low friction region, there is a means for modifying the surface of the non-facing portion 40 itself, but it is preferable to adopt a means for disposing an insulating member on the non-facing portion 40 as described later. Hereinafter, an example of an embodiment in which an insulating member is disposed on the non-facing portion 40 (the outer peripheral side non-facing portion 44 and the inner peripheral side non-facing portion 46) will be described.

FIG. 3 is a schematic cross-sectional view illustrating a state of winding start end sides of the negative electrode and the positive electrode before winding. As illustrated in FIG. 3, the negative electrode 12 has a negative electrode core 48 and a negative electrode mixture layer 50 disposed on the negative electrode core 48. The negative electrode mixture layer 50 may be formed on only one surface of the negative electrode core 48 or both surfaces of the negative electrode core 48. In the negative electrode 12 illustrated in FIG. 3, the outer peripheral side non-facing portion 44 includes the negative electrode mixture layer 50 disposed on the negative electrode core 48 and an outer peripheral side exposed portion 48a where the negative electrode mixture layer 50 is not disposed on the negative electrode core 48, but is not limited to this configuration, and may include, for example, the negative electrode mixture layer 50 disposed on the negative electrode core 48 or may include the outer peripheral side exposed portion 48a where the negative electrode mixture layer 50 is not disposed on the negative electrode core 48. Similarly, the inner peripheral side non-facing portion 46 is not limited to the case of including the negative electrode mixture layer 50 disposed on the negative electrode core 48 and an inner peripheral side exposed portion 48b where the negative electrode mixture layer 50 is not disposed on the negative electrode core 48, and may include the inner peripheral side exposed portion 48b where the negative electrode mixture layer 50 is not disposed on the negative electrode core 48 or may include the negative electrode mixture layer 50 disposed on the negative electrode core 48.

The negative electrode 12 includes a first insulating member 52a disposed on the outer peripheral side non-facing portion 44 and a second insulating member 52b disposed on the inner peripheral side non-facing portion 46. The first insulating member 52a shown in FIG. 3 is disposed on the negative electrode mixture layer 50 and on the outer peripheral side exposed portion 48a in the outer peripheral side non-facing portion 44. The first insulating member 52a may be disposed on the whole or a part of the negative electrode mixture layer 50, or may be disposed on the whole or a part of the outer peripheral side exposed portion 48a, in the outer peripheral side non-facing portion 44. Also, the second insulating member 52b shown in FIG. 3 is disposed on the negative electrode mixture layer 50 and on the inner peripheral side exposed portion 48b in the inner peripheral side non-facing portion 46. The second insulating member 52b may be disposed on the whole or a part of the negative electrode mixture layer 50, or may be disposed on the whole or a part of the inner peripheral side exposed portion 48b, in the inner peripheral side non-facing portion 46.

As described above, from the viewpoint of suppressing electrode plate deformation during charging and discharging, the non-facing portion has only to have the low friction region at at least one of the surface on the outer peripheral side non-facing portion 44 and the surface on the inner peripheral side non-facing portion 46. Therefore, at least one of the surface of the first insulating member 52a disposed on the outer peripheral side non-facing portion 44 and the surface of the second insulating member 52b disposed on the inner peripheral side non-facing portion 46 may have the low friction region. That is, at least one of the static friction coefficient between the surface of the insulating member 52a disposed on the outer peripheral side non-facing portion 44 and the facing separator (not illustrated) and the static friction coefficient between the surface of the second insulating member 52b disposed on the inner peripheral side non-facing portion 46 and the facing separator (not illustrated) has only to satisfy the above range.

For example, from the viewpoint of suppressing electrode plate deformation during charging and discharging, when the negative electrode 12 is wound, the first insulating member 52a is preferably disposed on the outer peripheral side non-facing portion 44 over greater than or equal to 1.5 turns in the circumferential direction (that is, the winding direction of the negative electrode 12) of the outer peripheral side non-facing portion 44, and more preferably disposed on the outer peripheral side non-facing portion 44 over greater than or equal to 1.5 turns and less than or equal to 3 turns.

The first insulating member 52a may be disposed on the negative electrode mixture layer 50 in the outer peripheral side non-facing portion 44, may be disposed on the outer peripheral side exposed portion 48a in the outer peripheral side non-facing portion 44, or may be disposed on both the outer peripheral side exposed portion 48a and the negative electrode mixture layer 50 in the outer peripheral side non-facing portion 44 as shown in FIG. 3. In the present embodiment, for example, from the viewpoint of suppressing electrode plate deformation during charging and discharging, at least one of the surface on the negative electrode mixture layer 50 in the outer peripheral side non-facing portion 44 and the surface on the negative electrode mixture layer 50 in the inner peripheral side non-facing portion 46 preferably has the low friction region. In consideration of this point, when the first insulating member 52a is installed on the outer peripheral side non-facing portion 44, the first insulating member 52a may be installed on the negative electrode mixture layer 50 in the outer peripheral side non-facing portion 44, and the surface of the first insulating member 52a on the negative electrode mixture layer 50 may have the low friction region. That is, when the first insulating member 52a is installed on the outer peripheral side non-facing portion 44, the first insulating member 52a may be installed on the negative electrode mixture layer 50 in the outer peripheral side non-facing portion 44, and the static friction coefficient between the surface of the first insulating member 52a on the negative electrode mixture layer 50 and the facing separator may be set to the above range.

In the present embodiment, for example, from the viewpoint of suppressing electrode plate deformation during charging and discharging, the low friction region at the surface on the negative electrode mixture layer 50 in the outer peripheral side non-facing portion 44 preferably occupies an area of greater than or equal to 80% and less than or equal to 100% of the entire surface on the negative electrode mixture layer 50 in the outer peripheral side non-facing portion 44. In consideration of this point, when the first insulating member 52a is installed on the negative electrode mixture layer 50 in the outer peripheral side non-facing portion 44, the low friction region at the surface of the first insulating member 52a may occupy an area of greater than or equal to 80% and less than or equal to 100% of the entire surface on the negative electrode mixture layer 50 in the outer peripheral side non-facing portion 44. That is, the area ratio of the low friction region at the surface of the first insulating member 52a overlapping the negative electrode mixture layer 50 in the outer peripheral side non-facing portion 44 may be greater than or equal to 80% and less than or equal to 100.

The first insulating member 52a is preferably disposed on the outer peripheral side non-facing portion 44 from a circumferential inner end edge 44a of the outer peripheral side non-facing portion 44 as illustrated in FIG. 3, for example, from the viewpoint of suppressing electrode plate deformation during charging and discharging. The first insulating member 52a may protrude from the outer peripheral side non-facing portion 44 and be disposed on the facing portion on the outer peripheral side, but is desirably not disposed on the facing portion on the outer peripheral side from the viewpoints of battery capacity and the like.

For example, from the viewpoint of suppressing electrode plate deformation during charging and discharging, the second insulating member 52b is preferably disposed on the inner peripheral side non-facing portion 46 over greater than or equal to 0.9 turns in the circumferential direction of the inner peripheral side non-facing portion 46, and the area ratio of the second insulating member 52b overlapping the inner peripheral side non-facing portion 46 is preferably greater than or equal to 50% and less than or equal to 100%.

The second insulating member 52b may be disposed on the negative electrode mixture layer 50 in the inner peripheral side non-facing portion 46, may be disposed on the inner peripheral side exposed portion 48b in the inner peripheral side non-facing portion 46, or may be disposed on both the inner peripheral side exposed portion 48b and the negative electrode mixture layer 50 in the inner peripheral side non-facing portion 46 as shown in FIG. 3. In the present embodiment, as described above, at least one of the surface on the negative electrode mixture layer 50 in the outer peripheral side non-facing portion 44 and the surface on the negative electrode mixture layer 50 in the inner peripheral side non-facing portion 46 preferably has the low friction region. In consideration of this point, when the second insulating member 52b is installed on the inner peripheral side non-facing portion 46, the second insulating member 52b may be installed on the negative electrode mixture layer 50 in the inner peripheral side non-facing portion 46, and the surface of the second insulating member 52b on the negative electrode mixture layer 50 may have the low friction region. That is, when the second insulating member 52b is installed on the inner peripheral side non-facing portion 46, the second insulating member 52b may be installed on the negative electrode mixture layer 50 in the inner peripheral side non-facing portion 46, and the static friction coefficient between the surface of the second insulating member 52b on the negative electrode mixture layer 50 and the facing separator may be set to the above range. In the present embodiment, for example, the surface on the inner peripheral side exposed portion 48b preferably has the low friction region from the viewpoint of suppressing electrode plate deformation during charging and discharging. In consideration of this point, when the second insulating member 52b is installed on the inner peripheral side non-facing portion 46, the second insulating member 52b may be installed on the inner peripheral side exposed portion 48b in the inner peripheral side non-facing portion 46, and the surface of the second insulating member 52b on the inner peripheral side exposed portion 48b may have the low friction region. Namely, when the second insulating member 52b is installed on the inner peripheral side non-facing portion 46, the second insulating member 52b may be installed on the inner peripheral side exposed portion 48b in the inner peripheral side non-facing portion 46, and a friction coefficient between the surface of the second insulating member 52b on the inner peripheral side exposed portion 48b and the facing separator may be set to the above range.

The second insulating member 52b is preferably disposed on the inner peripheral side non-facing portion 46 from a circumferential inner end edge 46a of the inner peripheral side non-facing portion 46 as illustrated in FIG. 3, for example, from the viewpoint of suppressing electrode plate deformation during charging and discharging. The second insulating member 52b may protrude from the inner peripheral side non-facing portion 46 and be disposed on the facing portion on the inner peripheral side, but is desirably not disposed on the facing portion on the inner peripheral side from the viewpoints of battery capacity and the like.

Examples of insulating members applied to the first insulating member 52a and the second insulating member 52b include an insulating sheet and an insulating tape. The insulating member preferably contains a fluororesin as a main component, and more preferably contains at least one of polytetrafluoroethylene (PTFE) and tetrafluoroethylene-hexafluoropropylene (FEP) as a main component, from the viewpoints of reducing the static friction coefficient between the insulating member and the separator, easily forming the low friction region at the surface, and the like. In the present disclosure, the main component is a component contained in an amount of greater than or equal to 50 mass% with respect to the total amount of the constituent components. That is, "containing at least one of PTFE and FEP as a main component" means containing greater than or equal to 50 mass% of at least one of PTFE and FEP. The insulating member may be, for example, a sheet in which a coating film is formed on a surface of a resin sheet. The coating film preferably contains a fluororesin as a main component, and more preferably contains at least one of PTFE and FEP as a main component, from the viewpoints of reducing the static friction coefficient between the coating film and the separator, easily forming the low friction region at the surface, and the like.

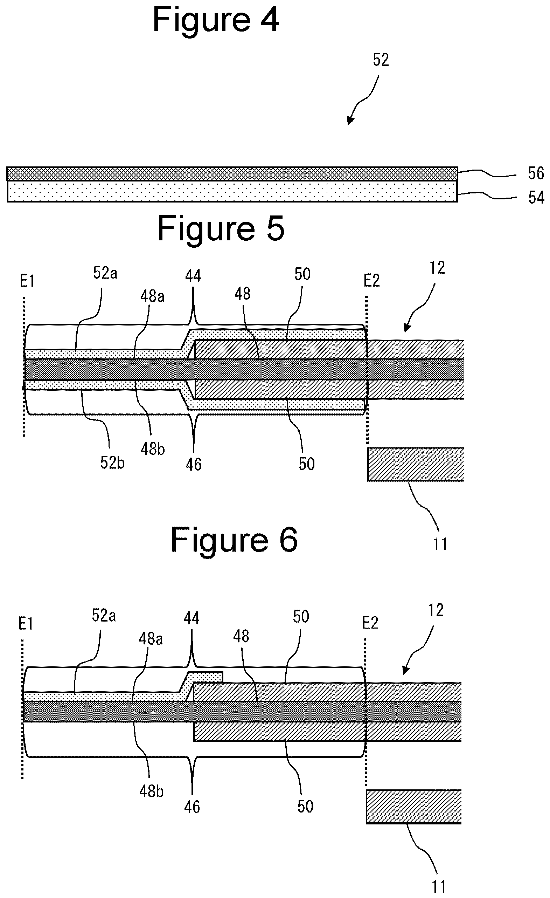

FIG. 4 is a schematic cross-sectional view illustrating an example of a configuration of the insulating tape. The insulating tape 52 described below is applied to the first insulating member 52a and the second insulating member 52b described above. The insulating tape 52 includes, for example, a base material layer 54 and an adhesive layer 56. The insulating tape 52 has a laminated structure in which the adhesive layer 56 and the base material layer 54 are stacked in this order from the non-facing portion side. Therefore, the surface of the base material layer 54 serves as the surface of the insulating tape 52 facing the separator. The thickness of the insulating tape 52 is preferably, for example, greater than or equal to 0.02 mm and less than or equal to 0.1 mm from the viewpoints of flexibility, strength and the like.

The base material layer 54 preferably contains a fluororesin as a main component, and more preferably contains at least one of polytetrafluoroethylene (PTFE) and tetrafluoroethylene-hexafluoropropylene (FEP) as a main component, for example, from the viewpoints of reducing the static friction coefficient between the base material layer and the separator, easily forming the low friction region at the surface, and the like. The base material layer 54 may contain other resins such as polyolefins (for example, polyethylene, and polypropylene), polystyrene, polyesters (for example, polyethylene terephthalate), polyimide, polyamide, polyamideimide, polycarbonate, and polyphenylene sulfide.

The adhesive layer 56 is mainly a layer for imparting adhesiveness to the negative electrode 12 to the insulating tape 52. The adhesive layer 56 is formed by coating an adhesive onto one surface of the base material layer 54. The adhesive constituting the adhesive layer 56 may be a hot melt type that exhibits adhesion properties by heating or a thermosetting type that cures by heating, but from the viewpoints of productivity and the like, an adhesive having adhesion properties at room temperature is preferable. Examples of the adhesive include an acrylic adhesive and a synthetic rubber adhesive.

The insulating tape 52 is not limited to the form illustrated in FIG. 4, and may have, for example, a form having an inorganic particle-containing layer between the base material layer 54 and the adhesive layer 56. The inorganic particle-containing layer has, for example, a structure in which inorganic particles are dispersed in a resin matrix constituting the layer. The inorganic particle-containing layer is formed, for example, by coating a resin solution containing inorganic particles onto one surface of the base material layer 54. Examples of the inorganic particles include metal oxide particles, metal nitride particles, metal fluoride particles, and metal carbide particles. Examples of the resin matrix include acrylic resins, urethane-based resins, and elastomers thereof.

As the negative electrode core 48 constituting the negative electrode 12, a foil of a metal that is stable in a potential range of the negative electrode, such as copper or a copper alloy, a film in which the metal is disposed on a surface layer thereof, or the like can be used. The thickness of the negative electrode core 48 is, for example, greater than or equal to 7 $\mu$m and less than or equal to 50 $\mu$m.

The negative electrode mixture layer 50 constituting the negative electrode 12 contains, for example, a negative electrode active material, a binder, and the like. The thickness of the negative electrode mixture layer 50 is, for example, in a range of greater than or equal to 10 $\mu$m and less than or equal to 100 $\mu$m. The negative electrode mixture layer 50 can be produced, for example, by applying a negative electrode mixture slurry containing the negative electrode active material, the binder, and the like onto the negative electrode core 48, drying a coating film, and then rolling the coating film.

The negative electrode active material contained in the negative electrode mixture layer 50 is not particularly limited, for example, as long as it can reversibly occlude and release lithium ions, and examples thereof include a carbon material and a Si-based material. The negative electrode active material preferably contains a Si-based material from the viewpoint of increasing the capacity of the battery.

The carbon material may be, for example, a conventionally known carbon material used as the negative electrode active material, and examples thereof include natural graphite such as flake graphite, massive graphite, and earthy graphite, and artificial graphite such as massive artificial graphite (MAG) and graphitized mesophase carbon microbeads (MCMB).

The Si-based material is not particularly limited as long as it can reversibly occlude and release ions such as lithium ions, and examples of the Si-based material include Si particles, alloy particles containing Si, and Si compound particles. Among them, Si compound particles are preferable.

Examples of the Si compound particles include Si compound particles having a silicate phase and Si particles dispersed in the silicate phase, Si compound particles having a silicon oxide phase and Si particles dispersed in the silicon oxide phase, and Si compound particles having a carbon phase and Si particles dispersed in the carbon phase.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among them, a silicate phase containing lithium (hereinafter, may be referred to as a lithium silicate phase) is preferable from the viewpoints of high lithium ion conductivity and the like.

The lithium silicate phase is represented by, for example, a formula: $Li_{2z}SiO_{2+z}$ ($0 < z < 2$). From the viewpoints of stability, ease of production, lithium ion conductivity, and the like, z preferably satisfies the relationship of $0 < z < 1$, and more preferably $z = 1/2$.

The Si compound particles in which the Si particles are dispersed in the silicon oxide phase are represented by, for example, a general formula $SiO_x$ (in which x is preferably in the range of $0 < x < 2$, and more preferably in the range of $0.5 \leq x \leq 1.6$). The Si compound particles in which the Si particles are dispersed in the carbon phase are represented by, for example, a general formula SixC1y (in which x and y are preferably in the ranges of $0 < x \leq 1$ and $0 < y \leq 1$, and more preferably in the ranges of $0.3 \leq x \leq 0.45$ and $0.7 \leq y \leq 0.55$).

The Si-based material preferably has a particle surface on which a conductive film containing a material having high conductivity is formed. Examples of the conductive film include carbon films, metal films, and metal compound films, and a carbon film is preferable from the viewpoints of electrochemical stability and the like. The carbon film can be formed with, for example, a CVD method in which acetylene, methane, or the like is used, a method in which coal pitch, petroleum pitch, a phenol resin, or the like is mixed with a silicon-based active material and the mixture is heat-treated, or the like. The conductive film may also be formed by fixing a conductive filler such as carbon black to the particle surface of the Si-based material using a binder.

The content of the Si-based material is, for example, preferably greater than or equal to 5 mass% with respect to the total mass of the negative electrode mixture layer 50 from the viewpoint of increasing the capacity of the battery.

The negative electrode active material may contain, in addition to the carbon material and the Si-based material, other materials capable of reversibly occluding and releasing lithium ions. Examples of other materials include Sn, alloys containing Sn, Sn-based materials such as tin oxide, and Ti-based materials such as lithium titanate.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

The positive electrode 11 includes a positive electrode core and a positive electrode mixture layer formed on a surface of the positive electrode core. The positive electrode mixture layer is preferably formed on both surfaces of the positive electrode core. As the positive electrode core, a foil of a metal that is stable in a potential range of the positive electrode 11, such as aluminum, a film in which the metal is disposed on a surface layer thereof, or the like can be used. The positive electrode mixture layer contains, for example, a positive electrode active material, a binder, a conductive agent, and the like. The positive electrode mixture layer can be produced, for example, by applying a positive electrode mixture slurry containing the positive electrode active material, the binder, the conductive agent, and the like onto the positive electrode core, drying a coating film, and then rolling the coating film.

Examples of the positive electrode active material contained in the positive electrode mixture layer include lithium transition metal oxides containing transition metal elements such as Co, Mn, and Ni. Examples of the lithium transition metal oxides include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (M is at least one of Na, Mg, Sc, Y, Mn, Fe, Co, Ni, Cu, Zn, Al, Cr, Pb, Sb, and B, $0 < x \leq 1.2$, $0 < y \leq 0.9$, and $2.0 \leq z \leq 2.3$). These may be used singly or in combination of two or more kinds thereof. From the viewpoint that a high capacity of the battery can be achieved, it is preferable that the positive electrode active material contain a lithium nickel composite oxide such as $Li_xNiO_2$, $Li_xCo_yNi_{1-y}O_2$, or $Li_xNi_{1-y}M_yO_z$ (M is at least one of Na, Mg, Sc, Y, Mn, Fe, Co, Ni, Cu, Zn, Al, Cr, Pb, Sb, and B, $0 < x \leq 1.2$, $0 < y \leq 0.9$, $2.0 \leq z \leq 2.3$). Inorganic particles such as tungsten oxide, aluminum oxide, or a lanthanoid-containing compound may be fixed to the particle surface of the lithium transition metal oxide.

Examples of the conductive agent contained in the positive electrode mixture layer include carbon materials such as carbon black (CB), acetylene black (AB), Ketjenblack, carbon nanotube (CNT), graphene, and graphite. The binder contained in the positive electrode mixture layer may be the same as that in the negative electrode 12.

As the separator 13, for example, a porous sheet having an ion permeation property and an insulation property is used. Specific examples of the porous sheet include a microporous thin film, a woven fabric, and a nonwoven fabric. As a material for the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. Further, the separator 13 may be a multi-layer separator including a polyethylene layer and a polypropylene layer, and a separator obtained by applying a material such as an aramid-based resin or ceramic to the surface of the separator 13 may be used.

EXAMPLES

The present disclosure will be further explained below with reference to Examples. However, the present disclosure is not limited to these Examples.

<Example 1>

[Production of Positive Electrode]

Mixed were 100 parts by mass of $LiNi_{0.88}Co_{0.09}Al_{0.03}O_2$, 1 part by mass of acetylene black (AB), and 0.9 parts by mass of polyvinylidene fluoride (PVDF), and an appropriate amount of N-methyl-2-pyrrolidone (NMP) was added to prepare a positive electrode mixture slurry. Next, the positive electrode mixture slurry was applied to both surfaces of an aluminum foil having a thickness of 15 μm, and a coating film was dried. Then, the coating film was rolled using a roller and then cut into a predetermined electrode size to produce a positive electrode having a positive electrode mixture layer formed on both surfaces of a positive electrode core. An exposed portion where the positive electrode mixture layer was not disposed on the positive electrode core was provided at a central portion of the positive electrode in the longitudinal direction, and an aluminum positive electrode lead was welded to the exposed portion.

[Production of Negative Electrode]

A negative electrode mixture slurry was prepared by mixing 92 parts by mass of graphite powder, 6 parts by mass of a Si-based material, 1 part by mass of sodium carboxymethylcellulose (CMC-Na), and 1 part by mass of a dispersion of styrene-butadiene rubber (SBR), and adding an appropriate amount of water thereto. Next, the negative electrode mixture slurry was applied to both surfaces of a copper foil having a thickness of 8 μm, and a coating film was dried. Then, the coating film was rolled using a roller and then cut into a predetermined electrode size to produce a negative electrode having a negative electrode mixture layer formed on both surfaces of a negative electrode core. An exposed portion where the negative electrode mixture layer was not disposed on the negative electrode core was provided at both ends of both surfaces of the negative electrode in the longitudinal direction, and a nickel negative electrode lead was welded to each of the exposed portions at both ends. Further, an insulating member was disposed at an end on the winding start side between both ends of the negative electrode in the longitudinal direction. As the insulating member, a fluororesin tape in which an acrylic adhesive was coated onto a fluororesin base material was used. Hereinafter, the arrangement position of the insulating member in Example 1 will be described.

FIG. 5 is a schematic cross-sectional view illustrating a state of winding start end sides of the negative electrode and the positive electrode before winding in Example 1. In Example 1, a first insulating member 52a (fluororesin tape) was disposed on an outer peripheral side exposed portion 48a and on a negative electrode mixture layer 50 in an outer peripheral side non-facing portion 44 of a negative electrode 12 so that the base material layer served as the tape surface, and a second insulating member 52b (fluororesin tape) was disposed on an inner peripheral side exposed portion 48b and on the negative electrode mixture layer 50 in an inner peripheral side non-facing portion 46 of the negative electrode 12 so that the base material layer served as the tape surface. The area ratio of the first insulating member 52a disposed on the outer peripheral side non-facing portion 44 overlapping the outer peripheral side exposed portion 48a in the outer peripheral side non-facing portion 44 is 100%, and the area ratio of the first insulating member overlapping the negative electrode mixture layer 50 in the outer peripheral side non-facing portion 44 is 94%. Further, when the negative electrode 12 is wound, the first insulating member 52a is disposed over 2.1 turns in the circumferential direction in the outer peripheral side non-facing portion 44 (the number of turns over which the first insulating member is disposed: 2.1 turns). On the other hand, the area ratio of the second insulating member 52b disposed on the inner peripheral side non-facing portion 46 overlapping the inner peripheral side non-facing portion 46 is 97%. Further, when the negative electrode 12 is wound, the second insulating member 52b is disposed over 2.1 turns in the circumferential direction in the inner peripheral side non-facing portion 46 (the number of turns over which the second insulating member is disposed: 2.1 turns).

<Static Friction Coefficient>

The static friction coefficient between each of the surfaces of the fluororesin tapes used as the first insulating member 52a disposed on the outer peripheral side non-facing portion 44 and the second insulating member 52b disposed on the inner peripheral side non-facing portion 46, and the facing separator when the wound-type electrode assembly was produced was 0.20. That is, both the surface of the first insulating member 52a and the surface of the second insulating member 52b have a low friction region where the static friction coefficient with the facing separator is 0.20. As described above, the area ratio of the first insulating member 52a overlapping the negative electrode mixture layer 50 in the outer peripheral side non-facing portion 44 is 94%. Therefore, the low friction region at the surface of the first insulating member 52a occupies an area of 94% of the entire surface on the negative electrode mixture layer 50 in the outer peripheral side non-facing portion 44.

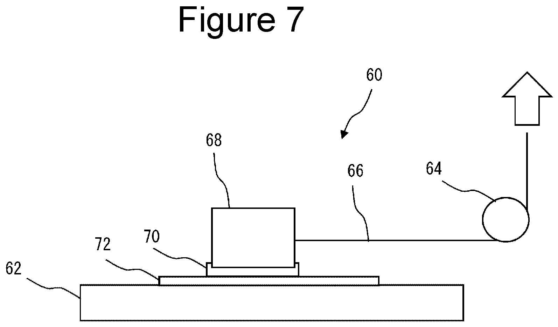

The method of measuring the static friction coefficient is as follows. FIG. 7 is a schematic view of an apparatus for measuring the static friction coefficient. An apparatus 60 illustrated in FIG. 7 includes a test stand 62, a pulley 64, a wire 66 hung on the pulley, and a weight 68 attached to one end of the wire 66 and disposed on the test stand 62. A first test piece 70 is fixed to a bottom surface of the weight 68. A second test piece 72 is fixed onto the test stand 62 so as to face the first test piece 70 fixed to the bottom surface of the weight 68. The other end of the wire 66 is connected to a tensile tester (not illustrated). The tensile tester is, for example, AUTOGRAPH (Shimadzu Corporation, model number AG-X). The weight 68 has a weight of 630 g. The first test piece 70 is a separator (dimensions: 4 cm × 3 cm) to which 0.1 mL of a non-aqueous electrolyte is dropped. The non-aqueous electrolyte is a non-aqueous electrolyte used in a non-aqueous electrolyte secondary battery. The second test piece 72 is a fluororesin tape (dimensions: 10 cm × 6 cm), and the base material layer serves as a surface facing the separator. In Example 2 described later, an FEP sheet was prepared as the second test piece 72. In Comparative Example 1 described later, two test pieces of a negative electrode mixture layer formed on a copper foil and a polypropylene tape were prepared as the second test piece 72. In Comparative Example 2 described later, a polypropylene tape was prepared as the second test piece 72. When a polypropylene tape is used as the test piece, the base material layer serves as the surface facing the separator.

At the time of measurement, an external force is applied to the weight 68 at a speed of 20 mm/min via the wire 66 by driving the tensile tester. The external force is gradually increased, and the force at which the separator starts to move is measured as a static frictional force. Then, the static friction coefficient is determined by the following formula.

$$\mu_s = F_s/F_p$$

$\mu_s$: static friction coefficient
$F_s$: static frictional force (N)

$F_p$: normal force (= 1.96 N) generated by mass of weight 68

[Preparation of Non-Aqueous Electrolyte]

A non-aqueous electrolyte was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF$_6$) therein at a concentration of 1.5 mol/liter.

[Production of Non-Aqueous Electrolyte Secondary Battery]

A wound-type electrode assembly was produced by winding the positive electrode and the negative electrode with the separator interposed therebetween. Insulating plates were respectively arranged above and below the electrode assembly, and the electrode assembly was housed in a case body. The negative electrode lead was welded to a bottom of the case body, and the positive electrode lead was welded to a sealing assembly. After the non-aqueous electrolyte was injected into the case body, the opening of the case body was sealed with the sealing assembly via a gasket to produce a non-aqueous electrolyte secondary battery.

<Example 2>

A non-aqueous electrolyte secondary battery was produced in the same manner as in Example 1 except that an FEP sheet was used instead of the fluororesin tape used as the insulating member in Example 1. The static friction coefficient between each of the surfaces of the FEP sheets used as the insulating members disposed on the outer peripheral side non-facing portion 44 and on the inner peripheral side non-facing portion 46, and the facing separator when the wound-type electrode assembly was produced was 0.40. That is, both the surface of the first insulating member 52a and the surface of the second insulating member 52b have a low friction region where the static friction coefficient with the facing separator is 0.40.

<Comparative Example 1>

FIG. 6 is a schematic cross-sectional view illustrating a state of winding start end sides of the negative electrode and the positive electrode before winding in Comparative Example 1. In Comparative Example 1, the first insulating member 52a was disposed on the outer peripheral side exposed portion 48a and on the negative electrode mixture layer 50 in the outer peripheral side non-facing portion 44 of the negative electrode 12 so that the base material layer served as the tape surface. The area ratio of the first insulating member 52a disposed on the outer peripheral side non-facing portion 44 overlapping the outer peripheral side exposed portion 48a in the outer peripheral side non-facing portion 44 is 100%, and the area ratio of the first insulating member overlapping the negative electrode mixture layer 50 in the outer peripheral side non-facing portion 44 is 13%. Further, when the negative electrode 12 is wound, the first insulating member 52a is disposed over 1.0 turns in the circumferential direction in the outer peripheral side non-facing portion 44 (the number of turns over which the first insulating member is disposed: 1.0 turns). As the first insulating member 52a, a polypropylene tape in which an acrylic adhesive was coated onto a polypropylene base material was used.
The static friction coefficient between the surface of the polypropylene tape used as the first insulating member 52a disposed on the outer peripheral side non-facing portion 44, and the facing separator when the wound-type electrode assembly was produced was 0.42. The static friction coefficient between the surface of the negative electrode mixture layer 50 of the outer peripheral side non-facing portion 44 not covered with the polypropylene tape and the facing separator when the wound-type electrode assembly was produced was 0.59. In the inner peripheral side non-facing portion 46 where the polypropylene tape is not disposed, the static friction coefficient between the surface of the negative electrode mixture layer 50 of the inner peripheral side non-facing portion 46 and the facing separator when the wound-type electrode assembly is produced is 0.59, and the static friction coefficient between the inner peripheral side exposed portion 48b of the inner peripheral side non-facing portion 46 and the facing separator when the wound-type electrode assembly is produced is 0.41.

<Comparative Example 2>

A non-aqueous electrolyte secondary battery was produced in the same manner as in Example 1 except that the polypropylene tape used in Comparative Example 1 was used instead of the fluororesin tape used as the insulating member in Example 1.

[Evaluation of Electrode Plate Deformation]

The non-aqueous electrolyte secondary batteries of Examples and Comparative Examples were charged at a constant current of 0.3 It until a battery voltage reached 4.2 V, and then charged at a constant voltage of 4.2 V until a current reached 0.02 It. Thereafter, the non-aqueous electrolyte secondary battery was discharged at a constant current of 1.0 It until the battery voltage reached 2.7 V. The charging and discharging were performed for 10 cycles. The cross section of the non-aqueous electrolyte secondary battery after 10 cycles was observed at the center portion of the electrode assembly using an X-ray CT apparatus (SMX-225CT FPD HR, manufactured by Shimadzu Corporation) to confirm the presence or absence of occurrence of electrode plate deformation. The results are summarized in Table 1.

[Table 1]

| | Insulating member | Insulating member disposed on outer peripheral side non-facing portion | | | Insulating member disposed on inner peripheral side non-facing portion | | Static friction coefficient between surface of insulating member and facing separator | Presence or absence of electrode plate deformation |
| | | Area ratio of insulating member overlapping negative electrode mixture layer | Area ratio of insulating member overlapping outer peripheral side exposed portion | Number of turns over which insulating member is disposed | Area ratio of insulating member overlapping inner peripheral side non-facing portion | Number of turns over which insulating member is disposed | | |
| | | % | % | Turns | % | Turns | | |
| Example 1 | Fluororesin tape | 94 | 100 | 2.1 | 97 | 2.1 | 0.20 | Absence |
| Example 2 | FEP sheet | 94 | 100 | 2.1 | 97 | 2.1 | 0.40 | Absence |
| Comparative Example 1 | Polypropylene tape | 13 | 100 | 1.0 | 0 | 0 | 0.42 | Presence |
| Comparative Example 2 | Polypropylene tape | 94 | 100 | 2.1 | 97 | 2.1 | 0.42 | Presence |

EP 4 697 436 A1

In Comparative Examples 1 and 2, electrode plate deformation was confirmed, but in Examples 1 and 2, electrode plate deformation was not confirmed. From this result, it can be said that when the surface on the non-facing portion has a low friction region where the static friction coefficient with the facing separator is less than or equal to 0.4 as in Examples (that is, by setting the static friction coefficient between the surface on the non-facing portion and the facing separator to less than or equal to 0.4), occurrence of electrode plate deformation during charging and discharging can be suppressed.

[Supplementary Notes]

(1) A secondary battery having an electrode assembly in which a positive electrode and a negative electrode where a negative electrode mixture layer is disposed on a negative electrode core are wound with a separator interposed therebetween, wherein

the negative electrode has, at a winding start side end, a non-facing portion that does not face the positive electrode with the separator interposed therebetween, and
a surface on the non-facing portion has a low friction region where a static friction coefficient with the facing separator is less than or equal to 0.4.

(2) The secondary battery according to (1), wherein the static friction coefficient is less than or equal to 0.3.
(3) The secondary battery according to (1) or (2), wherein the static friction coefficient is greater than or equal to 0.05.
(4) The secondary battery according to any one of (1) to (3), wherein

the negative electrode includes an insulating member disposed on the non-facing portion, and
a surface of the insulating member has the low friction region.

(5) The secondary battery according to (4), wherein the insulating member is an insulating tape.
(6) The secondary battery according to (5), wherein the insulating tape has a laminated structure in which an adhesive layer and a base material layer are stacked in this order from the non-facing portion side.
(7) The secondary battery according to (6), wherein the base material layer contains a fluororesin as a main component.
(8) The secondary battery according to (4), wherein the insulating member contains at least one of polytetrafluoroethylene (PTFE) and a tetrafluoroethylene-hexafluoropropylene copolymer (FEP) as a main component.
(9) The secondary battery according to any one of (4) to (8), wherein the insulating member has a thickness of greater than or equal to 0.02 mm and less than or equal to 0.1 mm.
(10) The secondary battery according to any one of (1) to (9), wherein

the non-facing portion includes an outer peripheral side non-facing portion and an inner peripheral side non-facing portion, and
at least one of a surface on the negative electrode mixture layer in the outer peripheral side non-facing portion and a surface on the negative electrode mixture layer in the inner peripheral side non-facing portion has the low friction region.

(11) The secondary battery according to (10), wherein the low friction region occupies an area of greater than or equal to 80% and less than or equal to 100% of an entire surface on the negative electrode mixture layer in the outer peripheral side non-facing portion.
(12) The secondary battery according to any one of (1) to (11), wherein

the non-facing portion includes an inner peripheral side non-facing portion, the inner peripheral side non-facing portion having an inner peripheral side exposed portion where no negative electrode mixture layer is formed on the negative electrode core, and
a surface on the inner peripheral side exposed portion has the low friction region.

REFERENCE SIGNS LIST

| 10 | Secondary battery |
|----|----|
| 11 | Positive electrode |
| 12 | Negative electrode |
| 13 | Separator |
| 14 | Electrode assembly |
| 15 | Battery case |
| 16 | Case body |
| 17 | Sealing assembly |
| 18a, 18b | Insulating plate |
| 19 | Positive electrode lead |
| 20a, 20b | Negative electrode lead |
| 21 | Projecting portion |
| 22 | Filter |
| 23 | Lower vent member |
| 24 | Insulator |
| 25 | Upper vent member |
| 26 | Cap |
| 27 | Gasket |
| 40 | Non-facing portion |
| 42 | Facing portion |
| 44 | Outer peripheral side non-facing portion |
| 44a, 46a | Circumferential inner end edge |
| 46 | Inner peripheral side non-facing portion |
| 48 | Negative electrode core |
| 48a | Outer peripheral side exposed portion |
| 48b | Inner peripheral side exposed portion |
| 50 | Negative electrode mixture layer |
| 52 | Insulating tape |
| 52a | First insulating member |
| 52b | Second insulating member |
| 54 | Base material layer |
| 56 | Adhesive layer |
| 60 | Apparatus |
| 62 | Test stand |
| 64 | Pulley |
| 66 | Wire |
| 68 | Weight |
| 70 | First test piece |
| 72 | Second test piece |

**Claims**

1. A secondary battery having an electrode assembly in which a positive electrode and a negative electrode where a negative electrode mixture layer is disposed on a negative electrode core are wound with a separator interposed therebetween, wherein

   the negative electrode has, at a winding start side end, a non-facing portion that does not face the positive electrode with the separator interposed therebetween, and
   a surface on the non-facing portion has a low friction region where a friction coefficient with the facing separator is less than or equal to 0.4.

2. The secondary battery according to claim 1, wherein the static friction coefficient is less than or equal to 0.3.

3. The secondary battery according to claim 1 or 2, wherein the static friction coefficient is greater than or equal to 0.05.

4. The secondary battery according to claim 1 or 2, wherein

   the negative electrode comprises an insulating member disposed on the non-facing portion, and

a surface of the insulating member has the low friction region.

5. The secondary battery according to claim 4, wherein the insulating member is an insulating tape.

6. The secondary battery according to claim 5, wherein the insulating tape has a laminated structure in which an adhesive layer and a base material layer are stacked in this order from the non-facing portion side.

7. The secondary battery according to claim 6, wherein the base material layer comprises a fluororesin as a main component.

8. The secondary battery according to claim 4, wherein the insulating member comprises at least one of polytetrafluoroethylene (PTFE) and a tetrafluoroethylene-hexafluoropropylene copolymer (FEP) as a main component.

9. The secondary battery according to claim 4, wherein the insulating member has a thickness of greater than or equal to 0.02 mm and less than or equal to 0.1 mm.

10. The secondary battery according to claim 1 or 2, wherein

the non-facing portion comprises an outer peripheral side non-facing portion and an inner peripheral side non-facing portion, and
at least one of a surface on the negative electrode mixture layer in the outer peripheral side non-facing portion and a surface on the negative electrode mixture layer in the inner peripheral side non-facing portion has the low friction region.

11. The secondary battery according to claim 10, wherein the low friction region occupies an area of greater than or equal to 80% and less than or equal to 100% of an entire surface on the negative electrode mixture layer in the outer peripheral side non-facing portion.

12. The secondary battery according to claim 1 or 2, wherein

the non-facing portion comprises an inner peripheral side non-facing portion, the inner peripheral side non-facing portion having an inner peripheral side exposed portion where no negative electrode mixture layer is formed on the negative electrode core, and
a surface on the inner peripheral side exposed portion has the low friction region.

# Figure 1

# Figure 2

# Figure 3

# Figure 4

52

56
54

# Figure 5

E1  52a  44  50  E2  12
48a  48
52b  48b  46  50  11
50

# Figure 6

E1  52a  44  50  E2  12
48a  48
48b  46  50
50
11

# Figure 7

## INTERNATIONAL SEARCH REPORT

| International application No. |
| --- |
| **PCT/JP2024/013739** |

| A. | CLASSIFICATION OF SUBJECT MATTER |
| --- | --- |

*H01M 10/0587*(2010.01)i; *H01M 4/13*(2010.01)i; *H01M 10/04*(2006.01)i
FI:   H01M10/0587; H01M4/13; H01M10/04 W

According to International Patent Classification (IPC) or to both national classification and IPC

| B. | FIELDS SEARCHED |
| --- | --- |

Minimum documentation searched (classification system followed by classification symbols)

H01M10/0587; H01M4/13; H01M10/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2008/059806 A1 (ASAHI KASEI CHEMICALS CORPORATION) 22 May 2008 (2008-05-22)<br>    paragraphs [0010]-[0011], [0038], [0040], [0049] | 1-4 |
| A | JP 2022-168456 A (PRIME PLANET ENERGY & SOLUTIONS INC.) 08 November 2022 (2022-11-08) | 1-12 |
| A | WO 2014/157416 A1 (NISSAN MOTOR CO., LTD.) 02 October 2014 (2014-10-02) | 1-12 |
| A | JP 2002-042859 A (SANYO ELECTRIC CO., LTD.) 08 February 2002 (2002-02-08) | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/013739**

| Patent document cited in search report | | | Publication date (day/month/year) | Patent family member(s) | | | Publication date (day/month/year) |
|---|---|---|---|---|---|---|---|
| WO | 2008/059806 | A1 | 22 May 2008 | US | 2010/0136410 | A1 | |
| | | | | paragraphs [0028]-[0031], [0114]-[0115], [0124]-[0125], table 1 | | | |
| | | | | EP | 2131417 | A1 | |
| | | | | KR | 10-2009-0079943 | A | |
| | | | | CN | 101536216 | A | |
| | | | | TW | 200830612 | A | |
| JP | 2022-168456 | A | 08 November 2022 | US | 2022/0344722 | A1 | |
| | | | | EP | 4084179 | A2 | |
| | | | | CN | 115249847 | A | |
| | | | | KR | 10-2022-0147026 | A | |
| WO | 2014/157416 | A1 | 02 October 2014 | (Family: none) | | | |
| JP | 2002-042859 | A | 08 February 2002 | (Family: none) | | | |

Form PCT/ISA/210 (patent family annex) (July 2022)

**EP 4 697 436 A1**

**REFERENCES CITED IN THE DESCRIPTION**

**Patent documents cited in the description**

- WO 2018180748 A